Europäisches Patentamt

European Patent Office

Office européen des brevets

(11) Publication number: **0 121 936**
**A2**

## (12) EUROPEAN PATENT APPLICATION

(21) Application number: 84104039.7

(22) Date of filing: 11.04.84

(51) Int. Cl.³: **G 01 N 27/28**

(30) Priority: 12.04.83 JP 63063/83

(43) Date of publication of application: 17.10.84
Bulletin 84/42

(84) Designated Contracting States: **DE GB**

(71) Applicant: **FUJI PHOTO FILM CO., LTD., 210 Nakanuma
Minami Ashigara-shi, Kanagawa 250-01 (JP)**

(72) Inventor: **Seshimoto, Osamu c/o Fuji Photo Film Co.,
Ltd., 11-46 Senzui 3-chome, Asaka Saitama Pre. (JP)**
Inventor: **Saito, Yoshio c/o Fuji Photo Film Co., Ltd.,
11-46 Senzui 3-chome, Asaka Saitama Pre. (JP)**
Inventor: **Kondo, Asaji c/o Fuji Photo Film Co., Ltd.,
11-46 Senzui 3-chome, Asaka Saitama Pre. (JP)**

(74) Representative: **Werner, Hans-Karsten, Dr. et al,
Deichmannhaus am Hauptbahnhof, D-5000 Köln 1 (DE)**

(54) Connection terminal assembly employable for ionic activity detector.

(57) A connection terminal assembly which is arranged in
an ionic activity analyzer and which is employed in contact
with a plurality of solid state type ion-selective electrode as-
semblies (ionic activity detector slides) which comprises
plural pairs of ion-selective electrodes each pair of which
develops an electric voltage specific to the ionic activity of
an ion, for measurement of the ionic activity of an ion em-
ploying the ionic activity analyzer, wherein the connection
terminal assembly comprises at least three connection ter-
minals, the therminals being supported by a support which
is the framework of the connection terminal assembly, re-
sultantly allowing the simultaneous measurement of at
least two different kinds of ions for the ionic activity
analyzer.

0121936

CONNECTION TERMINAL ASSEMBLY

EMPLOYABLE FOR

IONIC ACTIVITY ANALYZER

FIELD OF THE INVENTION

This invention relates to an electric connection terminal assembly arranged in or built in an ionic activity analyzer. More specifically, this invention relates to an electric connection terminal assembly arranged in or built in an electrolyte analyzer which is an apparatus employed for potentiometrical measurement of the ionic activity (or the concentration) of ionic components (electrolytes) contained in liquid test samples, e.g. biological fluids such as blood, blood plasma, blood serum and urine, beverage, water and liquors and/or products produced by reaction of those liquid components. More particularly, this invention relates to a connection terminal assembly which is employed for an ionic activity analyzer which determines the ionic activity (or the concentration) of at least two ionic components simultaneously or successively, the determination being conducted by measuring the voltage difference developed across a pair of solid film electrodes each of which includes an ion-selective membrane which is sensitive to a specific ion, and each of which is applied respectively with a test sample liquid and a reference liquid to allow a pair of the ion-selective membranes to develope an electric voltage difference representing the difference in ionic activity of the both materials applied thereto, wherein the improvement is to minimize the mesurement time and to simplify the measurement operational procedure, resultantly realizing a better grade of efficiency particularly for clinical biochemical examinations.

## BACKGROUND OF THE INVENTION

Measurement of ionic activity of ionic components contained in the biological fluid of patients is one of the major items of a clinical assay. Measurement of the ionic activity (or concentration) of $Na^+$, $K^+$, $Ca^{2+}$, $Cl^-$, $HCO_3^-$, $CO_3^{2-}$ and the like is extremely important, because they are the significant components of blood, blood plasma, blood serum and/or urine.

An electrolyte analyzer is usually employed for measurement of ionic activity of the foregoing ionic components. The essential requirements for clinical examination equipments are (a) good accuracy and reproducibility in performance, (b) no hazards to be developed in the environments during and/or after the measurement, (c) short period required for measurement, and (d) simplicity in the operational procedure. Insofar as an electrolyte analyzer is concerned, the latter two items are particularly important. This is because the measurement of $Na^+$ and $K^+$ is included in items of the urgent clinical examinations, which inherently requires quick acquisition of results and which can preferably be carried out by any non-specialist.

Based on the principle on which a measurement is possible, the electrolyte analyzers are classified into three categories including (a) a flame photometer type electrolyte analyzer, (b) a coulometry type electrolyte analyzer, and (c) a differential mode potentiometer type electrolyte analyzer. Additionally available is an electrolyte analyzer employing gas chromatography, which is not necessarily preferred for the usual clinical examination due to its rather complicated operational procedure and long period required for acquisition of results, and which is resultantly limited for the

measurement of $HCO_3^-$ or the like from the practical viewpoints. The flame photometer type electrolyte analyzer is an electrolyte analyzer comprising a flame photometer which detects one or more elements contained in a test sample liquid by measuring the wave length of the light which is emitted by the flame developed by combustion of a test sample liquid. Albeit this analyzer is preferably employed for the measurement of $Na^+$, $Ka^+$ et al. due to its excellent degree of reproducibility, it is accompanied by disadvantages wherein the operational and maintenance procedure is complicated and safety precaution is required due to employment of fire. The coulometry type electrolyte analyzer is an electrolyte analyzer which determines the ionic activity by measuring the amount of electricity moved. The differential mode potentiometric electrometer type electrolyte analyzer is an electrolyte analyzer which detects the difference in voltages developed by a pair of ion-selective electrode which is applied a test sample liquid and a reference electrode which is applied a reference liquid. When the pair of these electrodes are simultaneously immersed into a solution to be analyzed and a reference solution, respectively, the reference electrode and the ion-selective electrode constitute an electrochemical cell, across the electrodes of which a voltage develops. This voltage is proportional to the logarithm of the activity of the ions in the solution. The foregoing relationship between the voltage and the activity of the selected ion in solution is described by the well-known Nernst equation. A differential mode type potentiometric electrometer is employed for measuring the voltage between the electrodes.

Historically employed was a barrel type ion-selective electrode having an ion-selective glass film fitted on the end of a glass cylinder. Albeit an advantage is recognized for this device in comparison with the flame photometer type electrolyte analyzer from the aspect of safety, this device is accompanied by disadvantages wherein the cost is high and the procedure for pre-measurement adjustment, measurement and maintenance is complicated and rather inefficient. Further, good reproducibility can not be expected for this device, insofar as a crude sample e.g. a biological fluid is concerned.

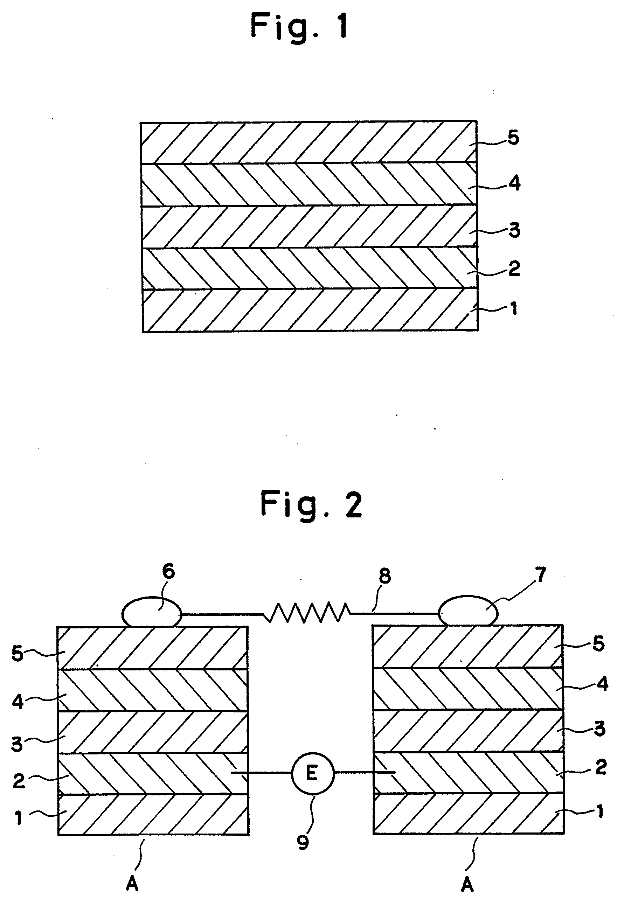

To remove the foregoing drawbacks inherent to the barrel type ion-selective electrode, contrived is an ion-selective electrode in which the ion-selective glass film is replaced by an organic ion-selective membrane, and a pair of which can be employed for determining the ionic activity of an ion. Moreover, a solid state type or dry type ion-selective electrode disclosed in U.S. Pat. No.4053 381 requires only a drop-size quantity of a test sample liquid for measurement of the ionic activity of a liquid. This solid state type ion-selective electrode is a film type electrode produced by lamination of operative layers, and an exemplary layer configuration is shown in Fig.1. Referring to the Figure, a metal layer 2 which is coated over a support layer 1, is coated by a layer 3 of an insoluble salt of the metal, which metal salt layer 3 is coated by a layer 4 of a reference electrolyte, which reference electrolyte layer 4 is coated by an ion-selective membrame or layer 5. This film type ion-selective electrode is superior to the conventional barrel type ion-selective electrode in the aspects of administration, measurement procedure and production cost et al. Since this is disposable, an advantage in the sanitary aspect is remarkable.

Referring to Fig.2, the procedure for measurement of the ionic activity employing the foregoing solid state type ion-selective electrode will be described below. Referring to the Figure, a test sample liquid 6 is applied on an ion-selective elctrode A and a reference liquid 7 is

0121936

applied on the other ion-selective electrode A', which is connected with a capillary bridge 8 to realize the elctrical conduction between the ion-selective elctrodes A and A'. A potentiometrical electrometer 9 is provided for measurement of the voltage difference between the two metal layers 2. When the test sample liquid 6 and the reference liquid 7 are applied respectively on the ion-selective electrodes A and A', each of the ion-selective electrodes A and A' develops voltages representing the ionic activities respectively of the test sample liquid and of the reference liquid. The potentiometrical electrometer 9 which is connected between the metal (Ag) layers 2 of the ion-selective elctrodes A and A', is allowed to detect the difference in the voltages developed in the test sample liquid and in the reference liquid. As a result, a simple arithmetic allows the absolute amount of the ionic activity (or the ionic concentration) of the test sample liquid to be assayed. The ion-selective membrame 5, the uppermost layer of the ion-selective electrode A or A' comprises a polymer binder containing an ion carrier or the mixture of an ion carrier and a solbent, resultantly allowing itself to be specifically sensitive to a specific ion, following which the foregoing ion carrier is selected.

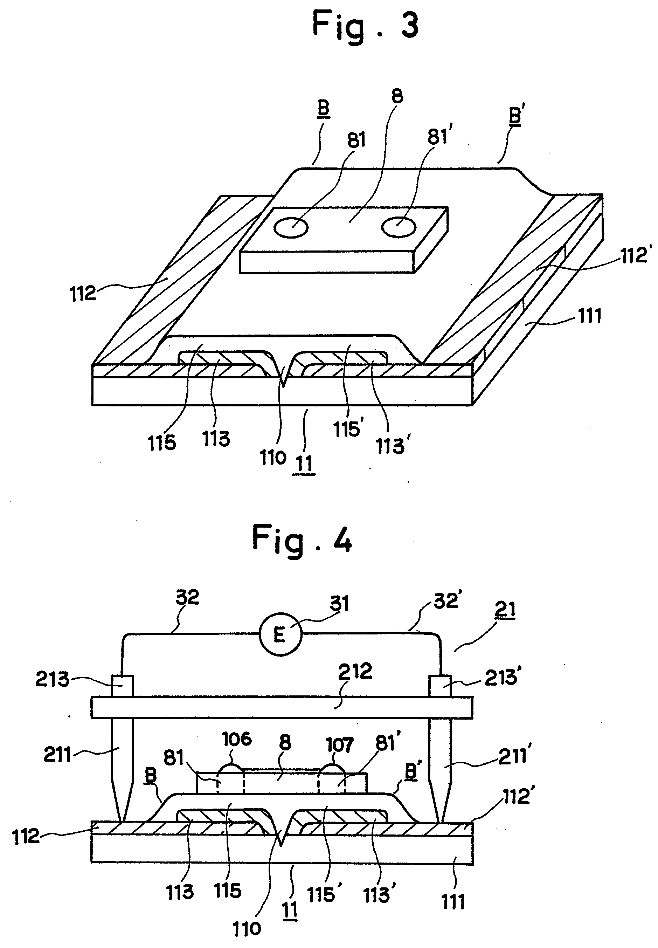

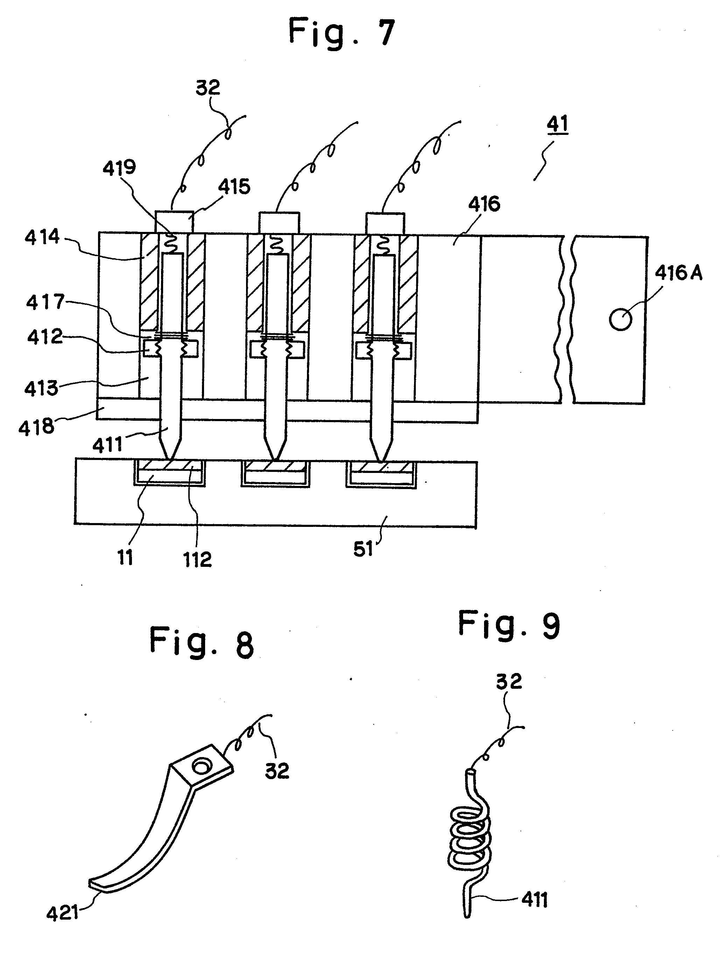

Fig.3 shows a perspective view of a solid state film type ion-selective electrode assembly (hereinafter referred to as an ionic activity detector slide) 11 available in the prior art and which comprises a pair of
solid state electrodes B and B'.  Referring to the
Figure, a common support 111 having a groove 110 produced
by skiving the surface of the common support 111 for the
purpose of isolation, supports two independent solid state
electrodes B and B' each of which has a structure
identical to each other.  Layers of a metal of e.g. Ag 112
and 112' coated over each half of the common support 111,
are partly covered by layers 113 and 113' of an insoluble
salt of the metal e.g. AgCl,  leaving uncovered areas on
the both ends to provide areas on which electric connection
terminals are contacted (the top surface of the metal
layers 112 and 112' on which hatching is observed).  The
uppermost layers 113 and 113' are ion-selective membranes,
which are partly covered by a capillary bridge 8, which is
further provided with cavities 81 and 81', in each of
which a test sample liquid and a reference liquid are
respectively applied.  Since the ion-selective membrane is
practically an insulator, it is not necessarily required
to split this layer as shown in Fig.2 but is allowed to be
a continuous layer as shown in Fig.3.  The capillary
bridge can be produced of a twisted thread as disclosed
in U.S. Patent No.4437 970.  A perspective exploded view
of an exemplary ionic activity detector slide is shown in
Fig.9 (The parts are assembled together to allow the upper
frame 02 and the lower frame 01 to contact each other).
A connection terminal assembly is placed on the exposed

0121936

areas of the metal layers 112 and 112' of the foregoing ionic activity detector slide 11 to measure the voltage difference between each of the solid state electrodes B and B', for the ultimate purpose to measure the ionic activity of a test sample liquid applied on either of the cavities 81 and 81'.

Fig.4 shows a cross-sectional view of an ionic activity detector slide (an ion-selective electrode assembly) 11, a connection terminal assembly 21 and an electrometer 31, shown under the position wherein a measurement is being conducted. Referring to the Figure, wherein the same numerals are employed as were employed in Fig.3, each of the connection terminal needles 211 and 211' of the connection terminal assembly 21 contacts respectively each of the metal layers 112 and 112' of the ionic activity detector slide 11. The connection terminal needles 211 and 211' are supported by a support 212 and are connected each other through the electrometer 31 which is connected the foregoing terminal needles 211 and 211' respectively through connection wires 32 and 32'. A test sample liquid 106 is applied in the cavity 81, and a reference liquid 107 is applied in the cavity 81'. As was described above, each of the solid state electrodes B and B' develops voltage representing the ionic activity respectively of the test sample liquid 106 and of the reference liquid 107, and each of the voltages is picked up respectively by each of the terminal needles 211 and

0121936

211', before they are applied to the potentiometrical electrometer 31 which detects the difference in the developed voltage for the ultimate purpose for detecting the ionic activity of the test sample liquid. Since the voltage difference developed between the terminal needles 211 and 211' is quite marginal, specifically less than 200 mV, it is important to make the contact resistance between each of the metal layers 112 and the corresponding one of the terminal needles 211 and 211', as less as possible. Otherwise, it is difficult to realize a good grade of measurement accuracy.

The foregoing ionic activity detector slide (ion-selective elctrode assembly) is designed to measure the ionic activity of one specific ion. Accordingly, plural kinds of ionic activity detector slides each of which is sensitive to a specific ion are employed for one clinical assay, because such an assay requires simultaneous measurement of plural different ions. Therefore, whenever an ionic activity analyzer using solid state type ion-selective electrode assembly of the prior art, is utilized for clinical assays, it is evidently accompanied by drawbacks wherein the examination procedure is complicated and a rather long time is required, because a step-by-step procedure is required due to the foregoing plurality of ionic activity detector slides which are

- 10 -

0121936

simultaneously employed for one assay, resulting in a less grade of efficiency. Thus, it is required to develope an ionic activity analyzer which allows simultaneous measurement of plural different kinds of ions.

OBJECTS AND SUMMARY OF THE INVENTION

An object of this invention is to provide an electrical connection terminal assembly which is employed, in contact with plural ion-selective electrode assemblies (or plural ionic activity detector slides), for measurement of the ionic activity of plural ions, the measurement being conducted employing an ionic activity analyzer, wherein the improvement is that the ionic activity analyzer is allowed simultaneous measurement of at least two kinds of different ions contained in a test sample liquid, resultantly decreasing the length of time required for the measurement and simplifying the procedure for the measurement.

Provided in accordance with this invention is a connection terminal assembly which is arranged in an ionic activity analyzer and which is employed in contact with a plurality of solid state type ion-selective electrode assemblies (a plurality of ionic activity detector slides) which comprises plural pairs of ion-selective electrodes each pair of which develops an electric voltage specific to the ionic activity of a specific ion, for measurement of the ionic activity of the specific ion employing the ionic activity analyzer, wherein the connection terminal assembly comprises at least three connection terminals.

The fundamental concept of this invention lies on an idea that simultaneous or successive application of a plurality of connection terminals (probs) to a plurality of solid state type ion-selective electrode assemblies (a plurality of ionic activity detector slides) is evidently effective to shorten the time required for the operational procedure. To realize this idea, the plurality of connection terminals (probs) is assembled in one body to form a connection terminal assembly in accordance with this invention, which is provided with at least three connection terminals each of which connection terminals is allowed to contact with each electrode included in the plurality of solid state type ion-selective electrode assemblies which assemblies are preferably assembled in one body, simultaneously or in succession.

Embodiments and/or modifications which can be derived from the foregoing subject matter are described below:

(1) A connection terminal assembly comprising a support which is arranged facing the foregoing plurality of solid state type ion selective electrode assemblies (the plurality of ionic activity detector slides) and at least three connection terminals which are elastically supported by the foregoing support, interleaving insulator members each of which surrounds each of the foregoing at least three connection terminals, between the foregoing support and each of the foregoing terminals. It is practically conveinent that the connection terminal assembly is assembled in one body.

(2) A connection terminal assembly comprising a support which is arranged facing the foregoing plurality of solid state type ion-selective electrode assemblies (the plurality of ionic activity detector slides) and at least three elastic connection terminals which are supported by the foregoing support, interleaving insulator members each of which surrounds each of the foregoing at least three connection terminals, between the foregoing support and each of the foregoing terminals. In this embodiment, since the connection terminals proper are elastic, a non-elastic support is allowed for the support. Thus, the structure is much simpler than the one described in (1).

(3) A connection terminal assembly described in (1) or (2), wherein the foregoing support and the foregoing plurality of solid state type ion-selective electrode assemblies are allowed to move along each other, resultantly allowing at least one pair of the connection terminals to contact with the corresponding pair or pairs of the ion-selective electrodes, in succession. In this embodiment, the quantity of the connection terminals can be selected to be less than 2 times the quantity of the solid state type ion-selective electrodes or less than the quantity identical to the quantity of the foregoing plurality of solid state type ion selective electrode assemblies (the plurality of ionic activity detector slides). This is effective to decrease the dimension of the connection terminal assembly. This is a remarkable advantage, whenever the foregoing plurality of solid state type ion-selective electrode assemblies is larger.

(4) A connection terminal assembly described in (1) or (2), further comprising a removable connector such as a plug type connector, which connects electrically and mechanically the foregoing at least three connection terminals and the foregoing ionic activity analyzer proper.

(5) A connection terminal assembly described in (1) or (2), wherein the foregoing at least three connection terminals are needle shaped members.

(6) A connection terminal assembly described in (1) or (2), wherein the foregoing at least three connection terminals are J shaped members.

(7) A connection terminal assembly described in (1) or (2), wherein the foregoing at least three connection terminals are at least two pairs, one each of the two terminals constituting the foregoing at least two pairs being contacted to a reference electrode terminal and the other one each of the two terminals constituting the foregoing at least two pairs being contacted to test sample electrode terminals. Since an ionic activity analyzer uses at least two ionic activity detector slides (at least two pairs of solid state type ion selective electrodes), the convenient quantity of connection terminals is the quantity identical to taht of the solid state type ion-selective electrodes or two times the quantity of the solid state type ion-selective electrode pairs.

(8) A connection terminal assembly described in (1) or (2), wherein one of the foregoing at least three connection terminals is contacted to a reference electrode and the others of the foregoing at least three connection terminals are contacted to at least two different test sample electrodes.   In this embodiment, one reference connection terminal can be commonly employed for a reference electrode, remaining the others to be employed for test sample electrodes, resultantly deceasing the dimension of the connection terminal assembly.

## BRIEF DESCRIPTION OF THE DRAWINGS

This invention, together with its various features and advantages, can be readily understood from the following more detailed description presented in conjunction with the following drawings, in which:

Fig.1 is an exemplary layer configuration of a solid state film type ion-selective electrode, Fig.2 is a schematic sectional view of a pair of solid state type ion-selective electrodes, shown under the position wherein measurement is being conducted for the ionic activity of an ion contained in a test sample liquid,

Fig.3 is a perspective view of a solid state ion-selective electrode assembly or an ionic activity detector slide,

Fig.4 is a cross-sectional view of an ionic activity detector slide (an ion-selective electrode assembly), a connection terminal assembly and an electrometer, shown under the position wherein a measurement is being conducted for the ionic activity of an ion contained in a test sample liquid,

Fig.5 is a plan view of a connection terminal assembly in accordance with one embodiment of this invention,

Fig.6 is a cross-sectional view taken along the plane designeted E-E in Fig.5,

Fig.7 is a cross-sectional view of a connection terminal assembly in accordance with another embodiment of this invention, shown under the position wherein a measurement is being conducted for the ionic activity of an ion contained in a test sample liquid,

Fig.8 is a perspective view of a terminal employable for a connection terminal assembly in accordance with a further embodiment of this invention,

Fig.9 is a perspective view of a terminal employable for a connection terminal assembly in accordance with an additionally further embodiment of this invention, and

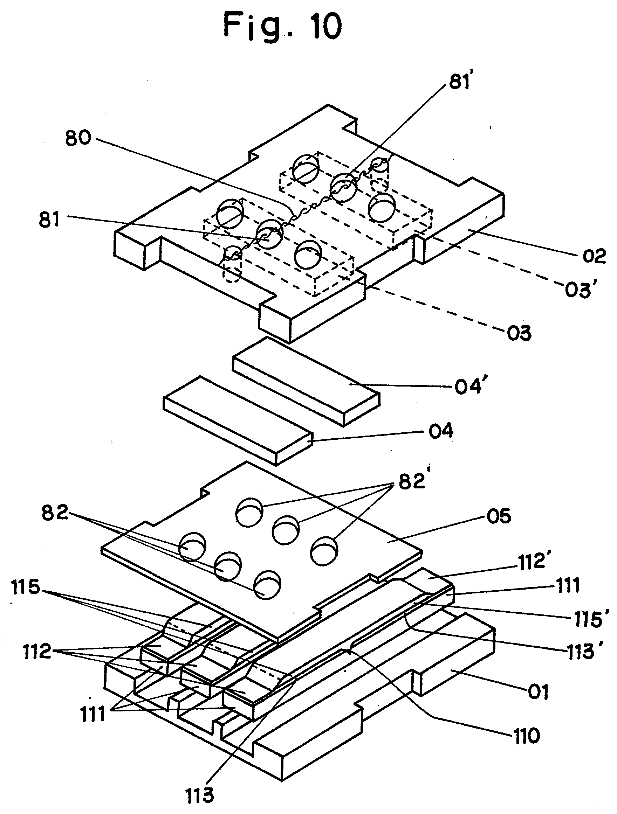

Fig.10 is a perspective exploded view of an ionic activity detector slide provided with a capillary bridge produced of a twisted thread.

0121936

## DETAILED DESCRIPTION OF

## PREFERRED EMBODIMENTS

Described below will be connection terminal assemblies in accordance with various embodiments and modifications of this invention.

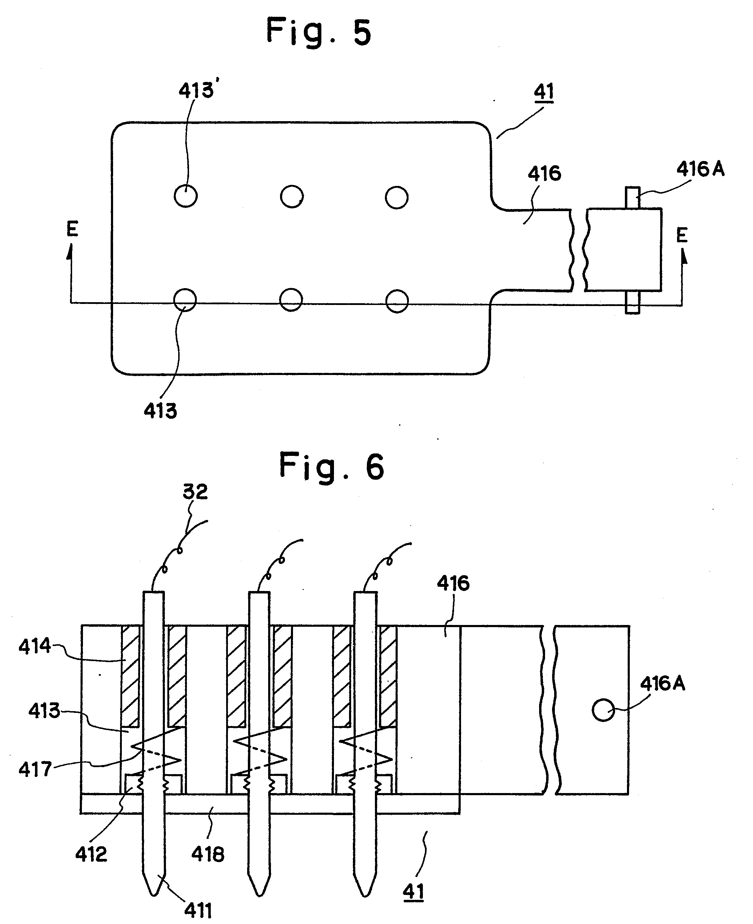

Fig.5 is a plan view of a connection terminal assembly in accordance with one embodiment of this invention, wherein the quantity of the pairs of solid state film type ion-selective electrodes and the quantity of the pairs of the needle shaped terminals (hereinafter referred to as a terminal needle) are both 3 and Fig.6 is a cross-sectional view of the same taken along the plane designated E-E in Fig.5. Referring to the Figures, a connection terminal assembly 41 is provided with an insulator support 416 having a shaft 416A with which the support 416 is rotatably supported by an ionic activity analyzer proper (not shown) and with small openings 413, 413' whose quantity is equal to the quantity of the ion-selective electrodes or two times the quantity of ionic activity detector slides and through which terminal needles 411 penetrate. Each of the terminal needles 411 whose quantity is equal to the quantity of ion-selective electrodes and is 6 in this example, is provided with a flange 412 of which the location can be adjusted along the terminal needle 411 upward and/or downward by means of a screw. An insulator tube 414 is fitted in the upper part of the small opening 413 to guide the terminal

0121936

needle 411 which is urged downward by a spring 417 placed, under tension, between the insulator tube 414 and the flange 412 which is supported by the lower frame 418 of the insulator support 41. The foregoing structure causes the terminal needles 411 to be kept upright and urged downward, resultantly maintaining the contact resistance at a small amount. The terminal needles 411 are arranged to allow each of them to contact each of the ion-selective electrodes 112 (See Fig.7). One each lead wire 32 leads from the top end of each of the terminal needles 411. It is of course realistic to connect these lead wires 32 with an ionic activity analyzer proper (not shown) through a removable connector assembly e.g. a plug type receptacle (not shown). In the case where a plug type receptacle or the like is employed for connection of the lead wires 32 with an ionic activity analyzer proper (not shown), it is preferable and realistic to assemble a connection terminal assembly proper 41 together with a plug type receptacle as one body (not shown). In this case, the shaft 416A can be located either on the connection terminal assembly or on the plug type receptacle.

Fig.7 is a cross-sectional view of a connection terminal assembly in accordance with another embodiment of this invention, shown together with three ionic activity detector slides 11, each of which is provided with one pair of ion-selective electrodes. Referring to the Figure, a connection terminal assembly 41 is, as a whole, rotatably supported by a shaft 416A, and each of the terminal needles 411 are caused to contact respectively to each of the ion-selective electrodes specifically the metal layers 112 of the ion activity detector slides 11 which are supported by a frame 51, when the connection terminal assembly 41 is downward rotated. When the terminal needles 411 contact with the ion activity detector slides 11, springs 417 shrink and urge the terminal needles 411 toward the ion-selective electrodes specifically the metal layers 112 to realize an electric conduction between the terminal needles 411 and the ion-selective electrodes specifically the metal layers 112 with a less amount of contact resistance. In this embodiment, the length of the terminal needles 411 is selected relatively short, so that the top end thereof does not appear beyond the top end of an insulator tube 414. Lead wires 32 lead from terminals 415 to which another lead wires 419 are connected from the terminal needles 411. This structure causes a benefit from the aspects of safety and convenience in handling.

Since all the connection terminal assemblies in accordance with the foregoing embodiments are provided with needle shaped treminals arranged in parallel to each other and which are urged toward the ionic activity detector slides specifically the ion-selective electrodes with an amount of thrust adjustable by means of the

0121936

location of springs 417, simultaneous contact or successive contacts is or are realized for between the terminals 411 and the ion-selective electrodes and the contact resistance therebetween is maintained at a substantially uniform amount for all the terminals 411.

Albeit needle shaped terminals 411 which are urged downward by independent elastic members or springs 417 are employed in the foregoing embodiments, wide selection is allowed for the shape of the terminals and/ or for the energy source with which the terminals are urged toward the ionic activity detector slides specifically toward the ion-selective electrodes. In other words, a J shaped terminal, shown by 421 in Fig.7 and a coil spring terminal, shown by 411 in Fig.8 are available. In this case, since the terminal proper is elastic, an elastic member is not necessarily required to downward urge the terminal.

Albeit no limitations are imposed, in principle, for the material of the terminals, it is preferable that a chemically stable material e.g. precious metals or precious metal alloys is employed for the terminal, or such a material is plated on the terminal.

Albeit the foregoing description is limited to the embodiments in which the support 416 is rotatably supported by a shaft 416A, a support which is allowed to move upward and downward without rotation is of course allowed.

0121936

As described above, employment of a removable connector assembly e.g. a plug type receptacle for connection of terminals and an ionic activity analyzer proper is convenient from the practical viewpoints. Again as described above, a connection terminal assembly produced to include a removal connector assembly e.g. a plug type receptacle in one body is also allowed.

The foregoing description has clarified that a connection terminal assembly which is employed for measurement of the ionic activity of plural ions, the measurement being conducted employing an ionic activity analyzer which uses a plurality of solid state type ion-selective electrode assemblies (a plurality of ionic activity detector slides) with each of which each of the connection terminals assembled in the foregoing connection terminal assembly is caused to contact, wherein the improvement is that the ionic activity analyzer is allowed simultaneous measurement of at least two kinds of different ions contained in a test sample liquid, resultantly decreasing the length of time required for the measurement and simplifying the operational procedure for the measurement, is successfully provided.

Albeit this invention has been described with reference to specific embodiments, this desription is not meant to be construed in a limiting sense. Various modifications of the described embodiments, as well as other embodiments of this invention, will become apparent to persons skilled in the art upon reference to the
description of the present invention.  It is therefore
contemplated that the apended claims will cover any such
modifications or embodiments as fall within the true
scope of this invention.

0121936

What is claimed is:

1. A connection terminal assembly which is arranged in an ionic activity analyzer and which is employed in contact with a plurality of solid state type ion-selective electrode assemblies which comprises plural pairs of ion-selective electrodes each pair of which develops an electric voltage specific to the ionic activity of an ion, for measurement of the ionic activity of an ion employing said ionic activity analyzer, wherein said connection terminal assembly comprises at least three connection terminals.

2. A connection terminal assembly defined in claim 1, wherein said at least three connection terminals are at least two pairs, one each of the two terminals constituting said at least two pairs being contacted with a terminal of a reference electrode and the other one of the two terminals constituting said at least two pairs being contacted with a terminal of a test sample electrode.

3. A connection terminal assembly defined in claim 1, wherein one of said at least three connection terminals is contacted with a terminal of a reference electrode and the others of said at least three connection terminals are contacted with terminals of at least two different test sample electrodes.

4. A connection terminal assembly which is arranged in an ionic activity analyzer and which is employed in contact with a plurality of solid state type ion-selective electrode assemblies which comprises plural pairs of ion-selective electrodes each pair of which develops an electric voltage specific to the ionic activity of an ion, for measurement of the ionic activity of an ion employing said ionic activity analyzer, comprising:

a support which is arranged facing said solid state type ion-selective electrodes, and

at least three connection terminals which are elestically supported by said support, interleaving insulator members each of which surrounds each of said at least three connection terminals, between said support and each of said connection terminals.

5. A connection terminal assembly  defined in claim 4, wherein said support and said solid state type ion-selective electrodes are allowed to move along each other, whereby allowing at least one pair of said connection terminals to contact with the corresponding pair of said ion selective electrodes in succession.

6. A connection terminal assembly defined in claim 4, further comprising a removable connector which connects said at least three connection terminals and said ionic

- 24 -

0121936

activity analyzer.

7. A connection terminal assembly defined in claim 4, wherein said at least three connection terminals are needle shaped members.

8. A connection terminal assembly defined in claim 4, wherein said at least three connection terminals are J shaped members.

9. A connection terminal assembly defined in claim 4, wherein said at least three connection terminals are at least two pairs, one each of the two terminals constituting said at least two pairs being contacted with a terminal of a reference electrode and the other one of the two terminals constituting said at least two pairs being contacted with a terminal of a test sample electrode.

10. A connection terminal assembly defined in claim 4, wherein one of said at least three connection terminals is contacted with a terminal of a reference electrode and the others of said at least three connection terminals are contacted with terminals of at least two different test sample electrodes.

11. A connection terminal assembly which is arranged in an ionic activity analyzer and which is employed in contact with a plurality of solid state type ion-selective electrode assemblies which comprises plural pairs of ion-selective electrodes each pair of which develops an electric voltage specific to the ionic activity of an

- 25 -

0121936

ion, for measurement of the ionic activity of an ion
employing said ionic activity analyzer, comprising:
a support which is arranged facing said solid state
type ion-selective electrodes, and
at least three elastic connection terminals supported
by said support, interleaving insulator members each of
which surrounds each of said at least three connection
terminals, between said support and each of said
connection terminals.

12. A connection terminal assembly defined in claim 11,
wherein said support and said solid state type ion-
selective electrodes are allowed to move along each
other, whereby allowing at least one pair of said
connection terminals to contact with the corresponding
pair of said ion selective electrodes in succession.

13. A connection terminal assembly defined in claim 11,
further comprising a removable connector which connects
said at least three connection terminals and said ionic
activity analyzer.

14. A connection terminal assembly defined in claim 11,
wherein said at least three connection terminals are
needle shaped members.

15. A connection terminal assembly defined in claim 11,
wherein said at least three connection terminals are J
shaped members.

16. A connection terminal assembly defined in claim 11,
wherein said at least three connection terminals are at least two pairs, one each of the two terminals constituting said at least two pairs being contacted with a terminal of a reference electrode and the other one of the two terminals constituting said at least two pairs being contacted with a terminal of a test sample electrode.

17. A connection terminal assembly defined in claim 11, wherein one of said at least three connection terminals is contacted with a terminal of a reference electrode and the others of said at least three connection terminals are contacted with terminals of at least two different test sample electrodes.

0121936

## Fig. 1

## Fig. 2

## Fig . 3

## Fig . 4

0121936

## Fig. 5

## Fig. 6

## Fig. 7

## Fig. 8

## Fig. 9

0121936

# Fig. 10